# EUROPEAN PATENT APPLICATION

(11) **EP 4 626 107 A1**
(43) Date of publication of application: **01.10.2025**
(21) Application number: 23905908.2
(22) Date of filing: 19.12.2023
(51) Int. Cl.: H04W 72/0446

(54) **INFORMATION PROCESSING METHOD AND APPARATUS**

(30) Priority: 19.12.2022 CN 202211638720
(71) Applicant: Huawei Technologies Co., Ltd., Shenzhen, Guangdong 518129 (CN)
(72) Inventor: HUANG, Lei, Shenzhen, Guangdong 518129 (CN); WU, Kuan, Shenzhen, Guangdong 518129 (CN); YANG, Xun, Shenzhen, Guangdong 518129 (CN)
(74) Representative: Gill Jennings & Every LLP
(86) International application number: PCT/CN2023/139694
(87) International publication number: WO 2024/131745

(57) **Abstract**

An information processing method and an apparatus are disclosed, which are applied to a wireless local area network system supporting 802.11 series protocols such as a next-generation Wi-Fi protocol of IEEE 802.11ax like 802.11be, Wi-Fi 7, or EHT, a next generation of 802.11be like Wi-Fi 8 or UHR, or Wi-Fi AI, and may be further applied to an ultra-wideband-based wireless personal area network system and a sensing system. A controller sends control information, and a controlee receives the control information. The control information includes a control information element, the control information element includes an empty slot information field, and the empty slot information field indicates an empty slot in a block corresponding to the control information. The controlee determines information about the empty slot based on the empty slot information field. This improves and optimizes a UWB in-band discovery and association mechanism.

## Description

This application claims priority to Chinese Patent Application No. 202211638720.1, filed with the China National Intellectual Property Administration on December 19, 2022, and entitled "INFORMATION PROCESSING METHOD AND APPARATUS", which is incorporated herein by reference in its entirety.

### TECHNICAL FIELD

This application relates to the field of communication technologies, and in particular, to an information processing method and an apparatus.

### BACKGROUND

An ultra wideband (ultra wideband, UWB) technology is a wireless carrier communication technology. For example, a nanosecond-level non-sine wave narrow pulse may be used for data transmission. Therefore, the ultra wideband technology occupies a wide spectrum range. Because of a narrow impulse and low radiation spectrum density of the UWB, the UWB has advantages such as a strong multipath resolution capability, low power consumption, and high confidentiality. An application scope of the UWB is expanding, and the UWB is applied to a plurality of devices including a high-capacity consumption platform. Unique capabilities of the UWB can provide pretty accurate ranging, positioning, sensing, data communication, and the like.

Currently, a UWB in-band discovery and association mechanism is proposed. However, this mechanism may be further improved.

### SUMMARY

Embodiments of this application provide an information processing method and an apparatus, to further improve and optimize a UWB in-band discovery and association mechanism.

According to a first aspect, an embodiment of this application provides an information processing method. The method includes:
receiving control information, where the control information includes a control information element (control IE), the control information element includes an empty slot information field (empty slot information field), and the empty slot information field indicates an empty slot in a block corresponding to the control information; and determining information about the empty slot based on the empty slot information field in the control information element.

In this embodiment of this application, after receiving the control information, a controlee that is not associated with a controller and that does not send an association request frame to the controller may obtain the information about the empty slot by parsing the control information element (information element, IE) in the control information, and skip parsing a scheduling IE of same control information, so that power consumption of the controlee can be effectively reduced, and energy efficiency of the controlee can be improved. For example, after determining that a value carried in an association availability field in the control IE is a first value, the controlee may parse the control IE to obtain the information about the empty slot.

In a possible implementation, the control information further includes a scheduling information element (scheduling IE), and the method further includes: ignoring the scheduling information element in the control information.

Generally, because the controlee has not been associated with the controller, the control information does not include a slot scheduled to the controlee. Therefore, even if the controlee has learned that there is no slot that is in the scheduling IE in the control information and that is scheduled to the controlee, the controlee still needs to parse the scheduling IE in the control information, to learn the information about the empty slot. However, according to this embodiment of this application, after obtaining the empty slot information field in the control information, the controlee may learn of the information about the empty slot based on the empty slot information field, so that the controlee obtains the empty slot more quickly and conveniently.

In a possible implementation, the control information element further includes an indication field, a value carried in the indication field includes the first value, and the first value indicates that the empty slot information field is present in the control information element.

In a possible implementation, the empty slot information field is used to carry a first bitmap, and each bit in the first bitmap indicates whether a corresponding slot is an empty slot; and a length of the first bitmap is greater than or equal to a number of slots included in the block, or a length of the first bitmap is greater than or equal to a number of remaining slots in the block, where the remaining slot is a slot after a slot that is in the block and that is used to send the control information.

In a possible implementation, the empty slot information field is used to carry start slot information corresponding to a second bitmap and the second bitmap, the start slot information indicates a slot corresponding to the 1^{st} bit in the second bitmap, and each bit in the second bitmap indicates whether a corresponding slot is an empty slot.

In a possible implementation, the control information further includes a capability information field, and the capability information field is used to carry capability information of the controller.

In a possible implementation, after determining the information about the empty slot based on the empty slot information field in the control information element, the method further includes: sending the association request frame in the empty slot indicated by the empty slot information field; and receiving an association response frame for the association request frame.

In a possible implementation, the association request frame includes a medium access control (medium access control, MAC) layer management entity (MAC sublayer management entity, MLME) element, the MLME element includes an extended capability information element, the extended capability information element is used to carry capability information of the controlee, and an identifier of the extended capability information element includes 0x1.

In a possible implementation, an identifier of the association request frame includes 0x0c.

In a possible implementation, the association response frame includes at least one of an ultra wideband session at capacity field or an association denied field, an identifier of the UWB session at capacity field includes 0x04, and an identifier of the association denied field includes 0x05.

In a possible implementation, an identifier of the association response frame includes 0x0d.

According to a second aspect, an embodiment of this application provides an information processing method. The method includes:
generating control information, where the control information includes a control information element, the control information element includes an empty slot information field, and the empty slot information field indicates an empty slot in a block corresponding to the control information; and sending the control information.

In a possible implementation, the control information element further includes an indication field, a value carried in the indication field includes a first value, and the first value indicates that the empty slot information field is present in the control information element.

In a possible implementation, the empty slot information field is used to carry a first bitmap, and each bit in the first bitmap indicates whether a corresponding slot is an empty slot; and a length of the first bitmap is greater than or equal to a number of slots included in the block, or a length of the first bitmap is greater than or equal to a number of remaining slots in the block, where the remaining slot is a slot after a slot that is in the block and that is used to send the control information.

In a possible implementation, the empty slot information field is used to carry start slot information corresponding to a second bitmap and the second bitmap, the start slot information indicates a slot corresponding to the 1^{st} bit in the second bitmap, and each bit in the second bitmap indicates whether a corresponding slot is an empty slot.

In a possible implementation, the control information further includes a capability information field, and the capability information field is used to carry capability information of a controller.

In a possible implementation, the method further includes: receiving an association request frame in the empty slot indicated by the empty slot information field; and sending an association response frame for the association request frame.

In a possible implementation, the association request frame includes a medium access control MAC layer management entity MLME element, the MLME element includes an extended capability information element, the extended capability information element is used to carry capability information of a controlee, and an identifier of the extended capability information element includes 0x1.

In a possible implementation, an identifier of the association request frame includes 0x0c.

In a possible implementation, the association response frame includes at least one of an ultra wideband session at capacity field or an association denied field, an identifier of the UWB session at capacity field includes 0x04, and an identifier of the association denied field includes 0x05.

In a possible implementation, an identifier of the association response frame includes 0x0d.

According to a third aspect, an embodiment of this application provides a communication apparatus, configured to perform the method in any one of the first aspect or the possible implementations of the first aspect. The communication apparatus includes units that perform the method in any one of the first aspect or the possible implementations of the first aspect. For example, the communication apparatus may include a processing unit and a transceiver unit.

According to a fourth aspect, an embodiment of this application provides a communication apparatus, configured to perform the method in any one of the second aspect or the possible implementations of the second aspect. The communication apparatus includes units that perform the method in any one of the second aspect or the possible implementations of the second aspect. For example, the communication apparatus may include a processing unit and a transceiver unit.

According to a fifth aspect, an embodiment of this application provides a communication apparatus. The communication apparatus includes a processor, configured to perform the method shown in any one of the first aspect or the possible implementations of the first aspect. Alternatively, the processor is configured to execute a program stored in a memory. When the program is executed, the method shown in any one of the first aspect or the possible implementations of the first aspect is performed.

In a possible implementation, the memory is located outside the communication apparatus.

In a possible implementation, the memory is located inside the communication apparatus.

In embodiments of this application, the processor and the memory may alternatively be integrated into one component. In other words, the processor and the memory may alternatively be integrated together.

In a possible implementation, the communication apparatus further includes a transceiver. The transceiver is configured to receive a signal and/or send a signal.

According to a sixth aspect, an embodiment of this application provides a communication apparatus. The communication apparatus includes a processor, configured to perform the method shown in any one of the second aspect or the possible implementations of the second aspect. Alternatively, the processor is configured to execute a program stored in a memory. When the program is executed, the method shown in any one of the second aspect or the possible implementations of the second aspect is performed.

In a possible implementation, the memory is located outside the communication apparatus.

In a possible implementation, the memory is located inside the communication apparatus.

In embodiments of this application, the processor and the memory may alternatively be integrated into one component. In other words, the processor and the memory may alternatively be integrated together.

In a possible implementation, the communication apparatus further includes a transceiver. The transceiver is configured to receive a signal and/or send a signal.

According to a seventh aspect, an embodiment of this application provides a communication apparatus. The communication apparatus includes a logic circuit and an interface. The logic circuit is coupled to the interface. The interface is configured to input control information. The logic circuit is configured to determine information about an empty slot based on an empty slot information field in the control information.

In a possible implementation, the logic circuit is further configured to: output an association request frame in the empty slot indicated by the empty slot information field, and parse an association response frame input through the interface.

In a possible implementation, the interface is further configured to input a beacon frame, and the logic circuit is configured to parse the beacon frame.

It may be understood that for descriptions of the logic circuit and the interface, refer to the first aspect. Details are not described herein again.

According to an eighth aspect, an embodiment of this application provides a communication apparatus. The communication apparatus includes a logic circuit and an interface. The logic circuit is coupled to the interface. The logic circuit is configured to generate control information. The interface is configured to output the control information.

In a possible implementation, the logic circuit is further configured to: input an association request frame in an empty slot indicated by an empty slot information field; and output an association response frame for the association request frame.

For example, the logic circuit may input the association request frame through the interface, and parse the association request frame. For example, the logic circuit may be configured to: determine the association response frame, and output the association response frame through the interface.

In a possible implementation, the interface is configured to output a beacon frame.

For example, the logic circuit may be further configured to determine the beacon frame.

It may be understood that for descriptions of the logic circuit and the interface, refer to the second aspect. Details are not described herein again.

According to a ninth aspect, an embodiment of this application provides a computer-readable storage medium. The computer-readable storage medium is configured to store a computer program. When the computer program is run on a computer, the method shown in any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method shown in any one of the second aspect or the possible implementations of the second aspect is performed.

According to an eleventh aspect, an embodiment of this application provides a computer program product. The computer program product includes a computer program. When the computer program is run on a computer, the method shown in any one of the first aspect or the possible implementations of the first aspect is performed.

According to a twelfth aspect, an embodiment of this application provides a computer program product. The computer program product includes a computer program. When the computer program is run on a computer, the method shown in any one of the second aspect or the possible implementations of the second aspect is performed.

According to a thirteenth aspect, an embodiment of this application provides a computer program. When the computer program is run on a computer, the method shown in any one of the first aspect or the possible implementations of the first aspect is performed.

According to a fourteenth aspect, an embodiment of this application provides a computer program. When the computer program is run on a computer, the method shown in any one of the second aspect or the possible implementations of the second aspect is performed.

According to a fifteenth aspect, an embodiment of this application provides a communication system. The communication system includes a controlee and a controller. The controlee is configured to perform the method shown in any one of the first aspect or the possible implementations of the first aspect. The controller is configured to perform the method shown in any one of the second aspect or the possible implementations of the second aspect.

### BRIEF DESCRIPTION OF DRAWINGS

FIG. 1a is a diagram of an architecture of a communication system according to an embodiment of this application;
FIG. 1b is a diagram of an architecture of a communication system according to an embodiment of this application;
FIG. 2a is a diagram of a time structure of a beacon interval according to an embodiment of this application;
FIG. 2b is a diagram of a time structure of an application period according to an embodiment of this application;
FIG. 2c is a diagram of a relationship between a block, a round, and a slot according to an embodiment of this application;
FIG. 2d is a diagram of a UWB in-band discovery and association mechanism according to an embodiment of this application;
FIG. 3 is a schematic flowchart of an information processing method according to an embodiment of this application;
FIG. 4 is a schematic flowchart of an information processing method according to an embodiment of this application;
FIG. 5a is a diagram of timing of an association request frame and an association response frame according to an embodiment of this application;
FIG. 5b is a diagram of timing of an association request frame and an association response frame according to an embodiment of this application;
FIG. 5c is a diagram of timing of an association request frame and an association response frame according to an embodiment of this application;
FIG. 6 is a schematic flowchart of an information processing method according to an embodiment of this application;
FIG. 7a is a schematic flowchart of an information processing method according to an embodiment of this application;
FIG. 7b is a schematic flowchart of an information processing method according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described in this specification may be combined with other embodiments.

In this application, "at least one (item)" means one or more, "a plurality of" means two or more, and "at least two (items)" means two or three or more. "And/or" is used to describe an association relationship between associated objects, and indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may indicate: a, b, c, "a and b", "a and c", "b and c", or "a and b and c".

The technical solutions provided in embodiments of this application are applicable to a UWB-technology-based wireless personal area network (wireless personal area network, WPAN). For example, methods provided in embodiments of this application are applicable to institute of electrical and electronics engineers (institute of electrical and electronics engineers, IEEE) 802.15 series protocols such as the 802.15.4a protocol, the 802.15.4z protocol, the 802.15.4ab protocol, or a future generation of UWB WPAN standard. Examples are not enumerated. For example, the methods provided in embodiments of this application are further applicable to the IEEE 802.11 series protocols such as the 802.11a/b/g protocol, the 802.11n protocol, the 802.11ac protocol, the 802.11ax protocol, the 802.11be protocol, or a next-generation protocol. Examples are not enumerated. The methods provided in embodiments of this application may be further applied to various communication systems, for example, an internet of things (internet of things, IoT) system, vehicle-to-everything (Vehicle to X, V2X), and a narrowband internet of things (narrowband internet of things, NB-IoT) system, and are applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The methods provided in embodiments of this application are further applicable to an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a long term evolution (long term evolution, LTE) system, a 5th-generation (5th-generation, 5G) communication system, a 6th-generation (6th-generation, 6G) communication system, and the like.

A UWB technology is a new wireless communication technology. In the UWB technology, data is transmitted through nanosecond-level non-sine wave narrow pulses, and modulation is performed on pulses with very steep rise and fall time. Therefore, the UWB technology occupies a wide spectrum range, so that a signal has a bandwidth of a gigahertz (GHz) magnitude. A bandwidth used by the UWB is usually greater than 1 GHz (or 500 MHz, or the like). A UWB system does not need to generate a sinusoidal carrier signal and can directly transmit a pulse sequence. Therefore, the UWB system has a wide spectrum and low average power. A UWB wireless communication system has advantages such as a strong multi-path resolution capability, low power consumption, and high confidentiality. This facilitates coexistence with other systems, thereby improving spectrum utilization and a system capacity. In addition, in a short-range communication application, transmit power of a UWB transmitter may be generally lower than 1 mW (milliwatt). Theoretically, interference generated by a UWB signal is equivalent to only broadband white noise. This facilitates good coexistence between the ultra wideband and existing narrowband communication. Therefore, both the UWB system and a narrowband (narrowband, NB) communication system can operate without interfering with each other.

For example, an IEEE 802.15 working group for wireless specialty networks (wireless specialty networks, WSN) establishes a 4ab working group to formulate revisions of 802.15.4-2020 and 802.15.4z-2020, to further enhance a UWB PHY layer and a UWB MAC layer (or referred to as a MAC sublayer) and a related ranging technology. For example, an enhancement scope includes: additional coding, a preamble, and modulation schemes, to increase a link budget and/or reduce air interface time relative to the IEEE standard 802.15.4 UWB; improvement of accuracy, precision, reliability, and interoperability, to implement high integrity ranging; a solution for reducing complexity and power consumption; defining a tightly coupled hybrid operation and narrowband signaling to assist the UWB; an enhanced local discovery and connection establishment mechanism; a sensing capability, to support presence detection and environment mapping; and a mechanism of supporting low power, a low-latency flow, and a high-data-rate flow to achieve a throughput of at least 50 Mb/s. It may be understood that the UWB technology described in embodiments of this application is merely an example. For example, with development of technologies, a feature or an application field of the UWB may change. This is not limited in embodiments of this application.

Embodiments of this application are mainly described by using a WPAN as an example, and in particular, by using a network used in the IEEE 802.15 series standards as an example. However, a person skilled in the art easily understands that various aspects in embodiments of this application may be extended to other networks using various standards or protocols, for example, a wireless local area network (wireless local area network, WLAN), Bluetooth (Bluetooth), a high performance radio LAN (high performance radio LAN, HIPERLAN) (a wireless standard similar to the IEEE 802.11 standard, mainly used in Europe), a wide area network (WAN), or another network that is currently known or developed in the future. Therefore, regardless of a used coverage area and a used wireless access protocol, the various aspects provided in embodiments of this application are applicable to any suitable wireless network.

The methods provided in embodiments of this application may be implemented by a communication apparatus in a communication system. The communication apparatus may be an apparatus in the UWB system. For example, the communication apparatus may include but is not limited to a communication server, a router, a switch, a bridge, a computer, a mobile phone, and the like. For another example, the communication apparatus may include a central control point, for example, a personal area network (personal area network, PAN) or a PAN coordinator. For another example, the communication apparatus may include user equipment (user equipment, UE). The user equipment may include various handheld devices, vehicle-mounted devices, wearable devices, internet of things (internet of things, IoT) devices, computing devices, other processing devices connected to a wireless modem, or the like that have a wireless communication function. Examples are not enumerated. For another example, the communication apparatus may include a chip, and the chip may be disposed in a communication server, a router, a switch, a user terminal, or the like. Examples are not enumerated.

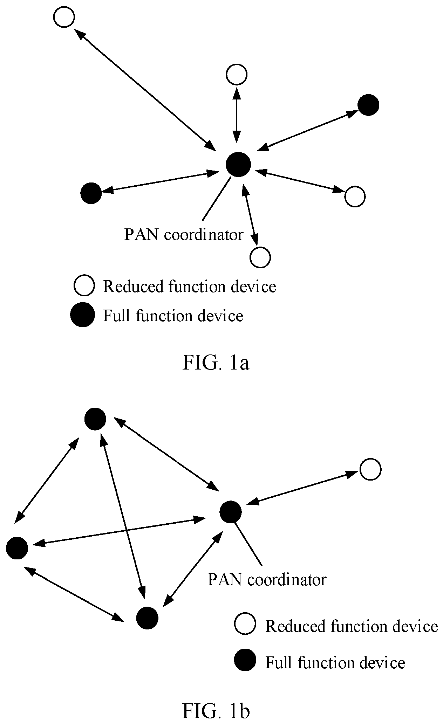

For example, FIG. 1a and FIG. 1b are diagrams of architectures of communication systems according to embodiments of this application. FIG. 1a shows a star topology structure according to an embodiment of this application, and FIG. 1b shows a point-to-point topology structure according to an embodiment of this application. As shown in FIG. 1a, in the star topology structure, one central control node may perform data communication with one or more other devices. As shown in FIG. 1b, in the point-to-point topology structure, data communication may be performed between different devices. In FIG. 1a and FIG. 1b, both a full function device (full function device, FFD) and a reduced function device (reduced function device, RFD) may be understood as communication apparatuses shown in this application. The full function device and the reduced function device are relative to each other. For example, the reduced function device cannot be a PAN coordinator (coordinator). For another example, compared with the full function device, the reduced function device may have no coordination capability or have a lower communication rate than the full function device. It may be understood that a PAN coordinator shown in FIG. 1b is merely an example, and other three full function devices shown in FIG. 1b may also be used as PAN coordinators, which are not shown one by one herein.

It may be understood that the full function device and the reduced function device shown in embodiments of this application are merely examples of the communication apparatus, and any communication apparatus that can implement the method provided in embodiments of this application falls within the protection scope of embodiments of this application.

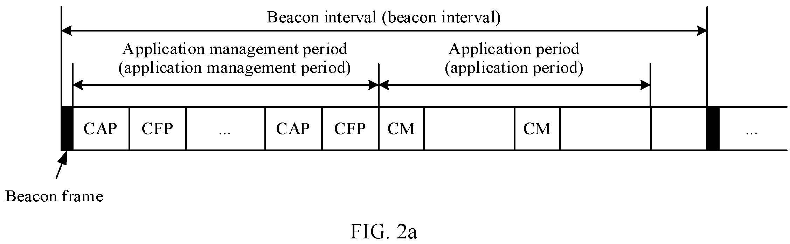

FIG. 2a is a diagram of a time structure of a beacon interval according to an embodiment of this application. The time structure of the beacon interval may also be understood as a time structure for a beacon-enabled application (the time structure for beacon-enabled application), a time structure applicable to a beacon-enabled application, or the like. As shown in FIG. 2a, the time structure may include an application management period (application management period) and an application period (application period). It may be understood that, because an ultra wideband and narrowband communication and/or Wi-Fi communication may coexist well, a blank after the application period shown in FIG. 2a may be understood as time in which UWB communication is not used, for example, time corresponding to the blank may be used for narrowband communication and/or Wi-Fi communication.

For example, the application management period may include one or more contention access periods (contention access period, CAP) and one or more contention free periods (contention free period, CFP). Each CAP may include one or more beacon slots (beacon slot, BS), and each CFP may include one or more beacon slots. Channel access in the slot in the CFP may be understood as scheduling-based channel access, and channel access in the slot in the CAP may be understood as contention-based channel access. It may be understood that the beacon interval may include the application management period (as shown in FIG. 2a), or may not include the application management period. A sequence of the CAP and the CFP in the application management period shown in FIG. 2a is merely an example, and should not be construed as a limitation on this embodiment of this application. It may be understood that a configuration of the beacon slot in the application management period may be different from that of a slot in the application period. For example, duration (or referred to as a size) of the beacon slot in the application management period may be different from that of the slot in the application period.

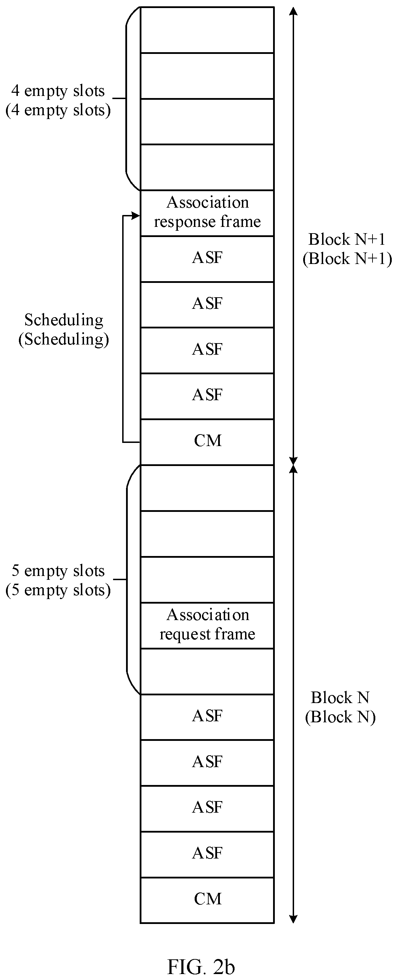

The application period may include one or more slots. For example, a controller may periodically send a beacon frame, where the beacon frame may include at least one of the following: a value of a beacon interval, duration of a beacon slot, usage of an application management period, or a start position of an application period. For example, as shown in FIG. 2b, the application period is based on a block (block). For example, one application period may include one or more blocks, one block may include one or more rounds (round), and one round may include one or more slots (slot). For example, one slot may be understood as duration sufficient to send at least one application-specific frame (application-specific frame, ASF), where the ASF may include a ranging frame, a sensing frame, a data frame, or the like. One round may be understood as duration sufficient to complete an entire application measurement period, for example, duration in which one ranging process can be completed, duration in which one sensing process can be completed, or duration in which one data communication process can be completed. One block may be understood as a time period in which one or more applications such as ranging, sensing measurement, and data communication can be completed. It may be understood that a number of slots included in a block shown in FIG. 2b is merely an example, and FIG. 2b does not show a relationship between a block and a round or a relationship between a round and a slot.

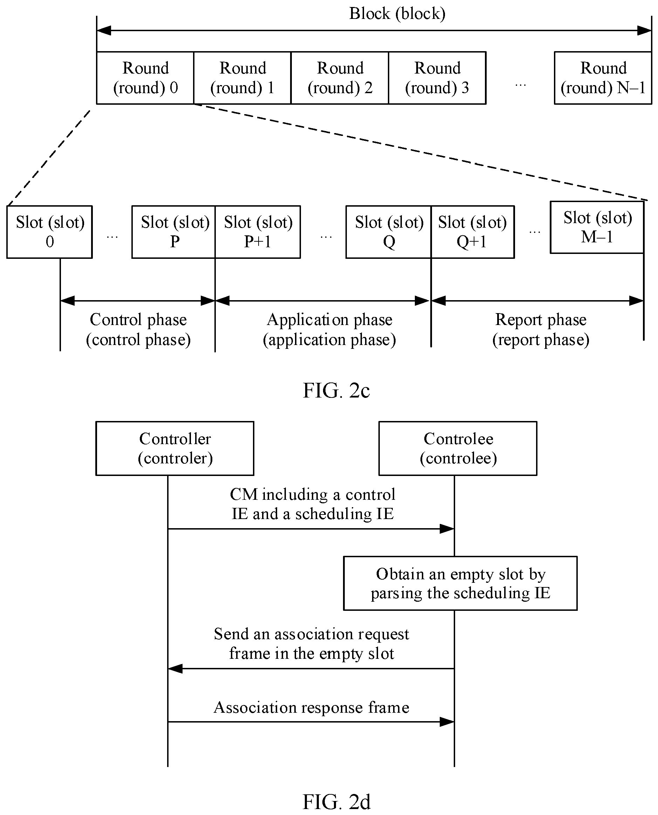

FIG. 2c is a diagram of a relationship between a block, a round, and a slot according to an embodiment of this application. As shown in FIG. 2c, each block may be divided into several rounds, and each round may be used to complete one independent sensing measurement (ranging, data communication, or the like) and result reporting (result reporting may be included if necessary). Each round may be divided into several slots, and each slot may be used to transmit at least one ASF. For example, at the beginning of each round, a controller may configure, by sending control information in one or more slots, configuration information corresponding to a block in which the round is located (for example, a control phase shown in FIG. 2c). Then, the controller and a controlee may perform sensing measurement (or ranging, data communication, or the like) in a subsequent slot (for example, an application phase shown in FIG. 2c). Optionally, the last one or more slots of each round may be used for result reporting (for example, a report phase shown in FIG. 2c). P in FIG. 2c is a positive integer less than Q, and Q is a positive integer less than M. N, M, P, and Q may all be positive integers. It may be understood that the control phase, the application phase, and the report phase shown in FIG. 2c are merely examples. In specific implementation, slots included in each round may not be classified into different phases. Alternatively, in specific implementation, there may be more or fewer division manners than those in FIG. 2c. This is not limited in embodiments of this application. In the diagram of the relationship shown in FIG. 2c, indexes of slots in a round 1 are not shown. For example, an index of the 1^{st} slot in the round 1 may be a slot M. For example, indexes of slots included in a block may be in ascending order.

It may be understood that, in the diagram of the relationship shown in FIG. 2c, the controller may not send the control information in the first P+1 slots of each round, and sending of the control information needs to be determined based on a measurement application process. For example, one measurement process may last for a plurality of rounds. In this case, the controller may send the control information only in a control phase of the measurement process. If sensing measurement lasts for two rounds, for example, a round 0 and a round 1, the controller may not send the control information in the round 1 after sending the control information in the round 0.

Currently, a UWB in-band discovery and association mechanism (UWB in-band discovery and association mechanism) is proposed. The mechanism may be understood as a process in which a controller sends control information, and a controlee sends an association request frame and receives an association response frame. For descriptions of the mechanism, refer to FIG. 2a to FIG. 2d.

For example, the controller may convey, at start time of a round by sending the control information (control message, CM), configuration information of a block in which the round is located. As shown in FIG. 2d, a controller may send a CM including a control information element (information element, IE) (or referred to as an application control IE) and a scheduling IE. For example, the control IE may be used to configure information such as duration (or referred to as a size) of a slot, duration (or referred to as a size) of a round, and duration (or referred to as a size) of a block. The control IE may include an association availability field (association availability field) (or referred to as an association availability field). When a value carried in the association availability field is 1, the controller may be in a wake-up state in a remaining slot in a block in which the round is located, to receive one or more association request frames from a controlee. After receiving the CM, the controlee may learn, by parsing the scheduling IE in the CM, devices to which slots in a block corresponding to the CM are configured, so that an unconfigured slot may be used as an empty slot. To be specific, the controlee may obtain the empty slot by parsing the scheduling IE, and then randomly select a slot from the empty slot to send an association request frame (as shown in FIG. 2b, the controlee may send the association request frame in a 2nd empty slot in five empty slots). After receiving the association request frame, the controller may send an association response frame in a slot in a next block (as shown in FIG. 2b, the controller may send the association response frame in a block N+1). For example, after receiving the association response frame, the controlee may perform subsequent communication based on a short address in the association response frame, and performing communication based on the short address can effectively reduce signaling overheads.

However, based on the method shown in FIG. 2d, there are some problems, as shown below:
First, the UWB in-band discovery and association mechanism still needs to be further optimized to improve efficiency. For example, the controller schedules a slot for another device (a device other than the controlee) via the scheduling IE in the CM. The controlee needs to parse the scheduling IE to obtain the slot scheduled to the another device, and then uses a slot that is not scheduled to the another device as an empty slot to learn information about the empty slot. In other words, for the controlee that is not associated with the controller, the CM generally has no slot scheduled to the controlee. Therefore, even if the controlee has learned that there is no slot that is in the scheduling IE in the CM and that is scheduled to the controlee, the controlee still needs to parse the scheduling IE in the CM, to learn the information about the empty slot.
Second, the UWB in-band discovery and association mechanism has some disadvantages. For example, a format of the association request frame is not backward compatible with a format of the association response frame. For example, in the IEEE 802.15.4-2020 standard, when a value of an association status (association status) field of the association response frame is 0x01, it indicates PAN at capacity (PAN at capacity); or when a value of an association status field is 0x02, it indicates PAN access denied (PAN access denied). However, in the UWB in-band discovery and association mechanism, 0x01 indicates UWB session at capacity (UWB session at capacity), and 0x02 indicates association denied (association denied). As a result, the association response frame in the UWB in-band discovery and association mechanism is not backward compatible.
Third, the UWB in-band discovery and association mechanism is incomplete. For example, before sending the association request frame to the controller, the controlee does not know capability information of the controller. If the controlee does not know the capability information of the controller, the controlee cannot know whether the controller can provide a service for the controlee, and cannot determine whether to associate with the controller.

In view of this, embodiments of this application provide an information processing method and an apparatus, to further optimize a UWB in-band discovery and association mechanism, and improve the UWB in-band discovery and association mechanism, so that the UWB in-band discovery and association mechanism is more complete and more efficient. The method may be applied to a controller and a controlee. The controller and the controlee may be understood as relative communication apparatuses. For example, the controller may be understood as a communication apparatus configured to control one or more controlees, and the controlee may be understood as a communication apparatus controlled by the controller.

For example, the controller may include a full function device, and the controlee may include a reduced function device. For another example, the controller may include a reduced function device, and the controlee includes a reduced function device. For another example, the controller includes a reduced function device, and the controlee includes a full function device. For another example, both the controller and the controlee are full function devices. It may be understood that the full function device and the reduced function device in FIG. 1a and FIG. 1b are merely examples, and any apparatus that can implement the method provided in embodiments of this application falls within the protection scope of embodiments of this application. Therefore, the controller and the controlee shown in the foregoing examples should not be understood as limitations on embodiments of this application.

It may be understood that, in embodiments of this application, the method provided in embodiments of this application is described by using two sides: the controller and the controlee. However, in a process of transmitting information between the controller and the controlee, there may be another apparatus. For example, the information between the controller and the controlee is forwarded through a forwarding apparatus. Therefore, mutual transfer of information in embodiments of this application may be implemented by using a technical means that can be completed by a person skilled in the art, and an apparatus other than the controller and the controlee is not limited in embodiments of this application.

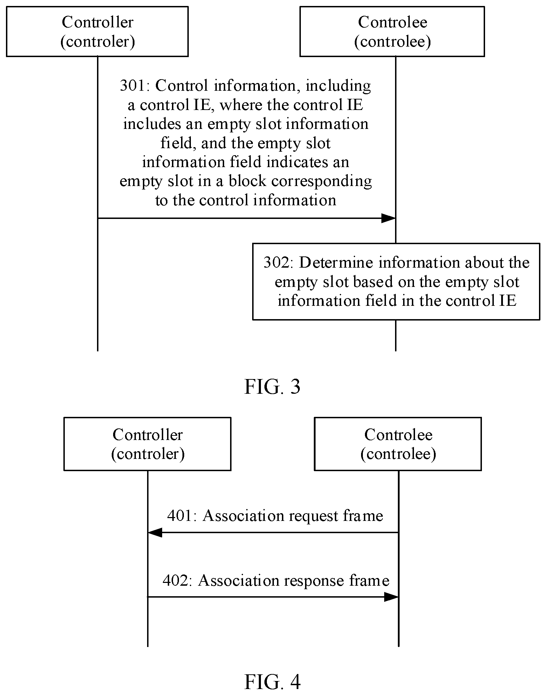

For example, the following embodiment shown in FIG. 3 can effectively resolve the first problem, or a combination of the following embodiment shown in FIG. 3 and another embodiment can effectively resolve the first problem. The following method shown in FIG. 3 may be an independent embodiment, or the method shown in FIG. 3 may be combined with another embodiment.

For example, the following embodiment shown in FIG. 4 can effectively resolve the second problem, or a combination of the following embodiment shown in FIG. 4 and another embodiment can effectively resolve the second problem. The following method shown in FIG. 4 may be an independent embodiment, or the method shown in FIG. 4 may be combined with another embodiment.

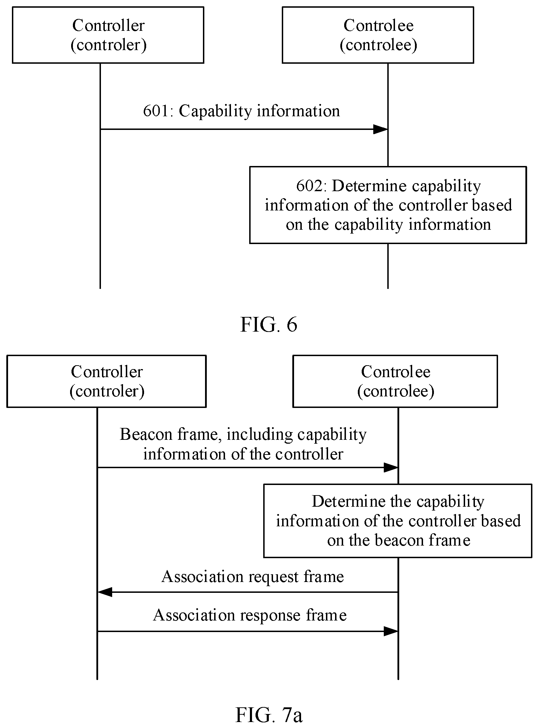

For example, the following embodiment shown in FIG. 6 can effectively resolve the third problem, or a combination of the following embodiment shown in FIG. 6 and another embodiment can effectively resolve the third problem. The following method shown in FIG. 6 may be an independent embodiment, or the method shown in FIG. 6 may be combined with another embodiment.

For example, a combination of the method shown in FIG. 3 and the method shown in FIG. 4 can effectively resolve the first problem and the second problem, a combination of the method shown in FIG. 3 and the method shown in FIG. 6 can effectively resolve the first problem and the third problem, and a combination of the method shown in FIG. 4 and the method shown in FIG. 6 can effectively resolve the second problem and the third problem. Combinations of the methods shown below are not described in detail in embodiments of this application.

FIG. 3 is a schematic flowchart of an information processing method according to an embodiment of this application. As shown in FIG. 3, the method includes the following steps.

301: A controller sends control information. Correspondingly, a controlee receives the control information. The control information may include a control IE. The control IE includes an empty slot information field, and the empty slot information field indicates an empty slot in a block corresponding to the control information.

For example, before sending the control information, the controller may generate (or determine) the control information. The control IE may also be referred to as an application control IE (application control IE). The block corresponding to the control information may be understood as a block in which the control information is located, a block in which a slot scheduled via the control information is located, or the like.

For example, the control information may include at least one of the following fields: content control (content control), session ID (session ID), block duration (block duration) (or referred to as block duration, a block size, or the like), round duration (round duration) (or referred to as round duration, a round size, or the like), slot duration (slot duration) (or referred to as slot duration, a slot size, or the like), contention phase structure (contention phase structure), ranging control (ranging control), data communication control (data communication control), sensing control (sensing control), TDOA control (TDOA control), or empty slot information (empty slot information). For example, for lengths of the foregoing fields, refer to Table 1. For descriptions of the content control field, refer to Table 2. It may be understood that sequences of the fields and a length of each field shown in Table 1 and Table 2 are merely examples. In specific implementation, the sequence of the fields may change, or the length of each field may change. This is not enumerated in embodiments of this application.

**Table 1**

| Octet: 2 | 0/4 | 0/1 | 0/1 | 0/2 | 0/Variable (variable) | 0/Variable | 0/Variable | 0/Variable | 0/Variable | 0/Variable |
|---|---|---|---|---|---|---|---|---|---|---|
| Content control | Session ID | Block duration | Round duration | Slot duration | Contention phase structure | Ranging control | Data communication control | Sensing control | TDOA control | Empty slot information |

For example, the session ID indicates an ID of a session corresponding to the CM. The block duration field indicates duration (or a size) of a block, the round duration field indicates duration (or a size) of a round, the slot duration field indicates duration (or a size) of a slot, and the contention phase structure field indicates information related to a contention phase. The ranging control field is used to carry control information related to ranging, the data communication control field is used to carry control information related to data communication, the sensing control field is used to carry control information related to sensing, and the empty slot information field indicates the empty slot in the block corresponding to the control information. It may be understood that, when at least one of the following information in the control information is the same as at least one of the following information in previous control information, the control information may not include at least one of the following information: session ID, block duration, round duration, slot duration, contention phase structure, ranging control, data communication control, sensing control, TDOA control, or empty slot information. For example, when the session ID in the control information is the same as a session ID in the previous control information, the control information may not include the session ID, in other words, a length of the session ID field is 0. Descriptions of other information are not enumerated.

For example, the control IE may further include an indication field, and the indication field may indicate whether the empty slot information field is present in the control IE. For example, when a value carried in the indication field includes a first value, it may indicate that the empty slot information field is present in the control IE; or if a value carried in the indication field includes a second value, it may indicate that the empty slot information field is not present in the control IE.

For example, the content control field may be shown in Table 2. For example, the content control field may include at least one of the following: session ID present (session ID present, SIP), ranging block duration present (ranging block duration present, RBDP), ranging round duration present (ranging round duration present, RRDP), ranging slot duration present (ranging slot duration present, RSDP), scheduling mode (scheduling mode), association availability (association availability) (or referred to as association availability), ranging control present (ranging control present, RCP), data communication control present (data communication control present, DCP), sensing control present (sensing control present, SCP), or time difference of arrival (time difference of arrival, TDOA) control present (TDOA control present, TCP). For descriptions of the fields shown in Table 2, refer to a related standard or protocol, or the like. This is not limited in embodiments of this application.

**Table 2**

| Bit: 0 | 1 | 2 | 3 | 4 | 5 | 6 | 7 | 8 | 9 | 10 to 15 |
|---|---|---|---|---|---|---|---|---|---|---|
| SIP | RBDP | RRDP | RSDP | Scheduling mode | Association availability | RCP | DCP | SCP | TCP | Reserved |

Generally, when a value carried in the association availability (association availability) (or referred to as association availability) field is 1, the controller may be in a wake-up state in a remaining slot in a block in which the round is located, to receive one or more association request frames from the controlee. However, in embodiments of this application, the association availability field may be reused as the indication field. The association availability field may indicate whether the empty slot in the block (or referred to as a current block) corresponding to the control information can be used for association. For example, if the value carried in the association availability field includes the first value, it indicates that the empty slot in the current block can be used for association; or if the value carried in the association availability field includes the second value, it indicates that the empty slot in the current block cannot be used for association. For another example, if the value carried in the association availability field includes the first value, it may further indicate that the controller is in the wake-up state in the remaining slot in the current block, to receive the one or more association request frame from the controlee. For another example, if the value carried in the association availability field includes the first value, it indicates that the empty slot information field is present in the control IE; or if the value carried in the association availability field includes the second value, it indicates that the empty slot information field is not present in the control IE. For example, the first value may be 1, and the second value may be 0; or the first value may be 0, and the second value may be 1.

For example, because empty slots in one block are the same, values carried in association availability fields of content control fields in all CMs in the same block may be the same. For example, all the association availability fields of the content control fields in all the CMs may carry the first value. For another example, empty slot information fields in all the CMs in the same block may be the same. In this way, the controlee can learn of information about the empty slot after obtaining one piece of control information in the block.

The following describes in detail the empty slot information field in embodiments of this application.

In a possible implementation of this application, the empty slot information field is used to carry a first bitmap. Optionally, the empty slot information field may be further used to carry length information of the first bitmap. For example, the empty slot information field includes a bitmap size field (or referred to as a bitmap size field or the like) and an empty slot bitmap field (or referred to as an empty slot bitmap field, a bitmap field, or the like). The bitmap size field indicates a size of the first bitmap included in the empty slot bitmap field. For example, the size may be in a unit of octet. Each bit in the empty slot bitmap field may indicate whether a corresponding slot is an empty slot. Indicating the size of the first bitmap in the unit of octet can effectively reduce signaling overheads of the bitmap size field. Certainly, a unit of the size that is of the first bitmap and that is indicated by the bitmap size field may alternatively be a bit. This is not limited in embodiments of this application. The empty slot information field includes the bitmap size field, so that the controlee can learn of a length of the bitmap based on the empty slot information field, to quickly parse the first bitmap. Optionally, the empty slot information field may not include the bitmap size field. In this case, the controlee may determine, based on the block duration and the slot duration in the control information, a number of slots included in the block, or determine a number of remaining slots in the block based on the block duration, the slot duration, and duration for sending the control information that are in the control information.

In an example, a length of the empty slot bitmap field may be greater than or equal to the number of slots included in the block. For example, the 1^{st} bit in the first bitmap carried in the empty slot bitmap field may correspond to the 1^{st} slot in the block, or a least significant bit (least significant bit, LSB) in the first bitmap corresponds to the 1^{st} slot in the block. For example, if one block includes 60 slots, the size of the first bitmap may be 8 octets (64 bits), and a length indicated by the bitmap size field may be 8 octets. For example, if a value carried by a bit in the first bitmap is a third value, it indicates that a slot corresponding to the bit is an empty slot. For another example, if a value carried by a bit in the first bitmap is a fourth value, it indicates that a slot corresponding to the bit is not an empty slot. For example, the third value may be 1, and the fourth group may be 0; or the third value may be 0, and the fourth group may be 1.

In another example, a length of the empty slot bitmap field may be greater than or equal to the number of remaining slots in the block. The remaining slot may be understood as a slot after a slot that is in the block and that is used to send the control information, or may be understood as a slot after a sending slot in the block. The sending slot may be understood as a slot used to send the control information. Alternatively, the remaining slot may be understood as a slot in the block other than the sending slot and a slot before the sending slot. For example, the 1^{st} bit in the first bitmap carried in the empty slot bitmap field may correspond to the sending slot, or correspond to the 1^{st} slot after the sending slot. In conclusion, a slot corresponding to a least significant bit in the first bitmap carried in the empty slot bitmap field may be determined based on the sending slot (for example, may correspond to the slot before the sending slot). That the 1^{st} bit in the first bitmap corresponds to the sending slot may be understood as that the LSB in the first bitmap corresponds to a slot in which the CM carrying the control IE is sent. For example, one block includes 60 slots, and the sending slot is the 17^{th} slot in the block, in other words, there are 43 remaining slots in the block. For example, the 1^{st} bit in the first bitmap may correspond to the 17^{th} slot, the 18^{th} slot, or the like. Examples are not enumerated. For example, the size of the first bitmap may be 6 octets (48 bits). For example, if a value carried by a bit in the first bitmap is a third value, it indicates that a slot corresponding to the bit is an empty slot. For another example, if a value carried by a bit in the first bitmap is a fourth group, it indicates that a slot corresponding to the bit is not an empty slot.

In another possible implementation of this application, the empty slot information field includes at least one of the following information: start slot information corresponding to a second bitmap or the second bitmap. Optionally, the empty slot information field may further include length information of the second bitmap. For example, the empty slot information field may include a start slot index field, a bitmap size field, and an empty slot bitmap field. The start slot index field may indicate an index of a slot corresponding to an LSB in the second bitmap included in the empty slot bitmap field, or indicate an index of a slot corresponding to the 1^{st} bit in the second bitmap. The bitmap size field may indicate a size of the second bitmap included in the empty slot bitmap field. For example, the size may be in a unit of octet. The bitmap size field may be determined based on a number of slots included in the block and the index that is of the slot and that is indicated by the start slot index field. Each bit in the second bitmap may indicate whether a corresponding slot is an empty slot. For example, if the index that is of the slot and that is indicated by the start slot index field is 18, it indicates that the slot corresponding to the 1^{st} bit in the second bitmap is a slot 18. If one block includes 60 slots, the size of the second bitmap may be 6 octets. For related descriptions of the second bitmap, refer to the foregoing descriptions of the first bitmap. Details are not described herein again.

The size of the bitmap carried in the empty slot information field shown above is shown by using the number of slots included in the block as an example. In this case, empty slot information fields in all control information in the block may carry a same bitmap, and the controlee may learn of the information about the empty slot by receiving any control information in the block. For example, the empty slot information field may indicate an empty slot in a round corresponding to the control information. In this case, bitmaps carried in the empty slot information fields in all the control information may be different. When the empty slot information field indicates the empty slot in the round corresponding to the control information, for specific descriptions of the empty slot information field, adaptively refer to the foregoing descriptions.

It may be understood that the first bitmap and the second bitmap shown above are used to distinguish between different objects. In specific implementation, the first bitmap and the second bitmap may not be distinguished. Therefore, descriptions of the first bitmap and the second bitmap in embodiments of this application should not be understood as limitations on embodiments of this application.

302: The controlee determines the information about the empty slot based on the empty slot information field in the control IE.

For example, the control information may further include a scheduling IE. For example, the controlee may ignore the scheduling IE in the control information, or the controlee may skip parsing the scheduling IE in the control information, or may obtain the information about the empty slot without parsing the scheduling IE. For example, the information about the empty slot shown in this embodiment of this application may include an index of the empty slot, a location of the empty slot, or the like.

In this embodiment of this application, after receiving the control information, the controlee that is not associated with the controller and that does not send the association request frame to the controller may obtain the information about the empty slot by parsing the control IE in the control information, and skip parsing a scheduling IE of same control information, so that power consumption of the controlee can be effectively reduced, and energy efficiency of the controlee can be improved. For example, after determining that the value carried in the association availability field in the control IE is the first value, the controlee may parse the control IE to obtain the information about the empty slot.

FIG. 4 is a schematic flowchart of an information processing method according to an embodiment of this application. As shown in FIG. 4, the method includes the following steps.

401: A controlee sends an association request frame, and correspondingly, a controller receives the association request frame.

For example, before sending the association request frame, the controlee may generate (or determine) the association request frame.

402: The controller sends an association response frame, and correspondingly, the controlee receives the association response frame.

For example, before sending the association response frame, the controller may generate (or determine) the association response frame.

For example, after receiving the association response frame, the controlee parses the association response frame to obtain a short address, to subsequently communicate with the controller based on the short address. For another example, after receiving the association request frame, the controller may confirm an identity and a capability of the controlee.

The following describes in detail the association request frame and the association response frame in embodiments of this application.

In a possible implementation of this application, the association request frame and the association response frame are enhanced in embodiments of this application, to support UWB in-band association and maintain backward compatibility.

For example, the association request frame may include at least one of the following: a MAC header (MAC header, MHR) field, a MAC layer management entity (MAC sublayer management entity, MLME) IE, a payload termination (payload termination) IE, a command ID (command ID) field, a capability information (capability information) field, or a frame check sequence (frame check sequence, FCS) field. For example, a format of the association request frame may be shown in Table 3. It may be understood that a sequence of the fields and a length of each field shown in Table 3 are merely examples. In specific implementation, the sequence of the fields may change, or the length of each field may change. This is not enumerated in embodiments of this application. Herein, descriptions of the sequence of the fields and the length of the field in Table 3 are also applicable to subsequent tables. Details are not described subsequently.

**Table 3**

| Octet: variable | 6 | 2 | 1 | 1 | 2/4 |
|---|---|---|---|---|---|
| MHR | MLME IE | Payload termination IE | Command ID=0x1 | Capability information | FCS |

If a value carried in an IE present field in a frame control field of the MHR field is 1, it indicates that one or more IEs (for example, an MLME ID and the payload termination IE) exist in the association request frame. A value carried in the command ID field may be 0x1, and the command ID 0x1 may correspond to the association request frame. The capability information field may be used to carry capability information of the controlee. The capability information of the controlee may include at least one of the following: Whether the controlee is an FFD or RFD, whether the controlee is powered by an alternating current, whether the controlee turns off a receiver in idle time to save energy, whether the controlee can send and receive an encrypted frame, whether the controlee requests fast association, whether the controlee wants to be assigned a short address as a result of an association process, or the like.

Table 4 shows an example of a format of the MLME IE. For example, the MLME IE includes an extended capability information IE, that is, a nested IE (nested IE). A value carried in a group ID field may be 0x1, and the group ID 0x1 may correspond to the MLME IE.

**Table 4**

| Bit: 0 to 10 | 11 to 14 | 15 | Octet: 4 |
|---|---|---|---|
| Length | Group ID=0x1 | Type=1 | Extended capability information IE |

Table 5 shows an example of a format of the extended capability information IE. For example, the extended capability information IE includes a sub-ID field and an extended capability information field. For example, a value carried in the sub-ID field may be 0x10. It may be understood that the sub-ID 0x10 shown herein is merely an example. For example, the value carried in the sub-ID field may be set to any one of 0x10 to 0x19, 0x2a, 0x3a to 0x3f, 0x41 to 0x45, and 0x47 to 0x7f.

**Table 5**

| Bit: 0 to 7 | 8 to 14 | 15 | Octet: 2 |
|---|---|---|---|
| Length | Sub-ID (for example, 0x10) | Type=0 | Extended capability information |

Table 6 and Table 7 show an example of a format of the extended capability information field. For example, the extended capability information field may include at least one of the following information:
A. Whether low-density parity check (low-density parity code, LDPC) code is supported. For example, an LDPC field may indicate whether the LDPC is supported. If a value carried in the LDPC field is 1 (or the LDPC field is set to 1), it indicates that the LDPC is supported; or if a value carried in the LDPC field is 0, it indicates that the LDPC is not supported.
B. Data rate (or whether a rate is supported). In Table 6, an example in which 124.8 Mbps is supported is used. A 124.8 Mbps field may indicate whether a data rate of 124.8 Mbps is supported. For example, if a value carried in the 124.8 Mbps field is 1, it indicates that the data rate of 124.8 Mbps is supported; or if a value carried in the 124.8 Mbps field is 0, it indicates that the data rate of 124.8 Mbps is not supported.
C. Whether a ranging sequence fragment (ranging sequence fragment, RSF)-only multi-millisecond (Multi-millisecond, MMS) packet format is supported (or whether a ranging sequence fragment-only multi-millisecond packet is supported). An RSF-only MMS packet field indicates whether the RSF-only MMS packet format is supported. For example, if a value carried in the RSF-only MMS packet field is 1, it indicates that the RSF-only MMS packet format is supported; or if a value carried in the RSF-only MMS packet field is 0, it indicates that the RSF-only MMS packet format is not supported.
D. Whether a mixed MMS packet format is supported (or whether a mixed MMS packet is supported). A mixed MMS packet (mixed MMS packet) field indicates whether the mixed MMS packet format is supported. For example, if the mixed MMS packet field is set to 1, it indicates that the mixed MMS packet format is supported; or if the mixed MMS packet field is set to 0, it indicates that the mixed MMS packet format is not supported. When the mixed MMS packet field is set to 1, the RSF-only MMS packet field needs to be set to 1.
E. MMS fragment number recommendation. An MMS fragment number recommendation (MMS fragment number recommendation) field indicates whether a ranging responser is supported to recommend a number of RSFs and a number of ranging integrity segments (ranging integrity fragment, RIF) in a next round of ranging to a ranging initiator. For example, if the MMS fragment number recommendation field is set to 1, it indicates that the ranging responder (for example, the controlee) is supported to recommend the number of RSFs and the number of RIFs in the next round of ranging to the ranging initiator (for example, the controller); or if the MMS fragment number recommendation field is set to 0, it indicates that the ranging responder is not supported to recommend the number of RSFs and the number of RIFs in the next round of ranging to the ranging initiator. When both the RSF-only MMS packet field and the mixed MMS packet field are set to 1, the MMS fragment number recommendation field needs to be set to 1.
F. Whether UWB sensing (or referred to as UWB-based sensing measurement) is supported. For example, a sensing (sensing) field indicates whether the UWB sensing is supported. For example, if the sensing field is set to 1, it indicates that the UWB sensing is supported; or if the sensing field is set to 0, it indicates that the UWB sensing is not supported.
G. Whether a packet format 1 is supported. For example, a SENS1 field indicates whether the sensing packet format 1 (SENS1) is supported. If the SENS1 field is set to 1, it indicates that the sensing packet format 1 (SENS1) is supported; or if the SENS1 field is set to 0, it indicates that the sensing packet format 1 (SENS1) is not supported.
H. Whether a packet format 2 is supported. For example, a SENS2 field indicates whether the sensing packet format 2 (SENS2) is supported. If the SENS2 field is set to 1, it indicates that the sensing packet format 2 (SENS2) is supported; or if the SENS2 field is set to 0, it indicates that the sensing packet format 2 (SENS2) is not supported.
I. Whether a processed CIR is supported to be reported. For example, a processed CIR report (processed CIR report) field indicates whether the processed CIR (for example, a distance and a speed of an object) is supported to be reported. For example, if the processed CIR report field is set to 1, it indicates that the processed CIR is supported to be reported; or if the processed CIR report field is set to 0, it indicates that the processed CIR is not supported to be reported.
J. Bit width of a CIR report (bit width of CIR report). For example, a bit width field of the CIR report may indicate a bit width supported by a quadrature component and an in-phase component of a CIR, or a bit width supported by an amplitude and a phase. The bit width field of the CIR report may occupy two bits. For example, if the 1^{st} bit is set to 1, it indicates that a 10-bit width is supported; or if the 1^{st} bit is set to 0, it indicates that a 10-bit width is not supported. If the 2^{nd} bit in the bit width field of the CIR report is set to 1, it indicates that a 12-bit width is supported; or if the 2^{nd} bit is set to 0, it indicates that a 12-bit width is not supported.
K. Whether a strongest detected tap (or referred to as a strongest detection path or the like) is used as a reference. For example, a strongest detected tap as reference (strongest detected tap as reference) field indicates whether a strongest detected tap is supported to be used as a reference for a window-based CIR report. If the strongest detected tap as reference field is set to 1, it indicates that the strongest detected tap is supported to be used as the reference for the window-based CIR report; or if the strongest detected tap as reference field is set to 0, it indicates that the strongest detected tap is not supported to be used as the reference for the window-based CIR report.
L. Whether a DL TDOA is supported. A DL TDOA field indicates whether the DL TDOA is supported. If the DL TDOA field is set to 1, it indicates that the DL TDOA is supported; or if the DL TDOA field is set to 0, it indicates that the DL TDOA is not supported.
M. Whether an UL TDOA is supported. An UL TDOA field indicates whether the UL TDOA is supported. If the UL TDOA field is set to 1, it indicates that the DL TDOA is supported; or if the UL TDOA field is set to 0, it indicates that the DL TDOA is not supported.

**Table 6**

| Bit: 0 | 1 | 2 | 3 | 4 | 5 | 6 | 7 |
|---|---|---|---|---|---|---|---|
| LDPC | 124.8 Mbps | RSF-only MMS packet | Mixed MMS packet | MMS fragment number recommendation | Sensing | Sens1 | Sens2 |

**Table 7**

| Bit: 8 | 9 and 10 | 11 | 12 | 13 | 14 and 15 |
|---|---|---|---|---|---|
| Processed CIR report | Bit width of the CIR report | Strongest detected tap as reference | DL TDOA | UL TDOA | Reserved |

It may be understood that the capability information shown in Table 6 and Table 7 is merely an example. In specific implementation, the association request frame may further have more or fewer pieces of capability information than those in Table 6 and Table 7.

Table 8 shows an example of a format of the association response frame. For example, the association response frame may include at least one of the following: an MHR field, a command ID field, a short address field, an association status field, and an FCS field. The command ID field may be set to 0x02, or the command ID 0x02 may correspond to the association response frame. For descriptions of the short address field, the FCS field, and the MHR field, refer to a related standard (for example, the IEEE 802.15.4-2020 standard). Details are not described herein again.

Table 9 shows an example of valid values of the association status field. As shown in Table 9, UWB session at capacity may be set to 0x04, and association denied may be set to 0x05. In this way, the following problem is effectively avoided: The controlee cannot learn of an association status because 0x01 indicates both PAN at capacity and UWB session at capacity, and 0x02 indicates both PAN access denied and association denied. The association response frame provided in embodiments of this application implements backward compatibility. It may be understood that 0x04 and 0x05 shown above are merely examples. For example, values of UWB session at capacity and association denied may alternatively be set to any two values in 0x03 to 0xff.

**Table 8**

| Octet: variable | 1 | 2 | 1 | 2/4 |
|---|---|---|---|---|
| MHR | Command ID=0x02 | Short address | Association status | FCS |

**Table 9**

| Association status | Description |
|---|---|
| 0x00 | Association successful (association successful) |
| 0x01 | PAN at capacity (PAN at capacity) |
| 0x02 | PAN access denied (PAN access denied) |
| 0x03 | Hopping sequence offset duplication (hopping sequence offset duplication) |
| 0x04 | UWB session at capacity (UWB session at capacity) |
| 0x05 | Association denied (association denied) |
| 0x06 to 0x7f | Reserved (reserved) |
| 0x80 | Fast association successful (fast association successful) |
| 0x81 to 0xff | Reserved (reserved) |

The association request frame and the association response frame provided in embodiments of this application may reuse frame formats in the IEEE 802.15.4-2020 standard, so that standard formulation complexity can be effectively reduced.

In another possible implementation of this application, the association request frame may be a newly defined MAC command frame, to support UWB in-band association. Table 10 shows an example of a format of a newly defined association request frame. For example, the association request frame may include at least one of the following: an MHR field, a command ID field, a capability information field, an extended capability information field, or an FCS field. The command ID field is set to a value that is reserved in any revision prior to the IEEE 802.15.4-2020 standard and an IEEE 802.15.4ab revision (for example, any of 0x0c to 0x12, 0x1d to 0x1f, and 0x29 to 0xff), to indicate the newly defined association request frame. For descriptions of the capability information field, refer to Table 3. For descriptions of the extended capability information field, refer to Table 6 and Table 7. Details are not described herein again.

**Table 10**

| Octet: variable | 1 | 1 | 2 | 2/4 |
|---|---|---|---|---|
| MHR | Command ID=0x0c | Capability information | Extended capability information | FCS |

For example, the association response frame may be a newly defined MAC command frame, to support UWB in-band association. Table 11 shows an example of a format of a newly defined association response frame. For example, the association response frame includes at least one of the following: an MHR field, a command ID field, a short address field, an association status field, or an FCS field. The command ID field is set to a value that is reserved in the any revision prior to the IEEE 802.15.4-2020 standard and the IEEE 802.15.4ab revision (for example, any of 0x0c to 0x12, 0x1d to 0x1f, and 0x29 to 0xff), to indicate the newly defined association response frame. A value of the command ID field in the association request frame needs to be different from a value of the command ID field in the association response frame. Table 12 shows an example of valid values of the association status field. Three values (for example, 0x01, 0x02, and 0x03) of the association status field may indicate "association successful", "UWB session at capacity", and "association denied", respectively. It may be understood that for related descriptions of the value of the association status field, refer to Table 9. Details are not described herein again.

**Table 11**

| Octet: variable | 1 | 2 | 1 | 2/4 |
|---|---|---|---|---|
| MHR | Command ID=0x0d | Short address | Association status | FCS |

**Table 12**

| Association status | Description |
|---|---|
| 0x00 | Association successful (association successful) |
| 0x01 | UWB session at capacity (UWB session at capacity) |
| 0x02 | Association denied (association denied) |
| 0x03 to 0xff | Reserved (reserved) |

In embodiments of this application, the association request frame and the association response frame are newly defined, and implementation is simple.

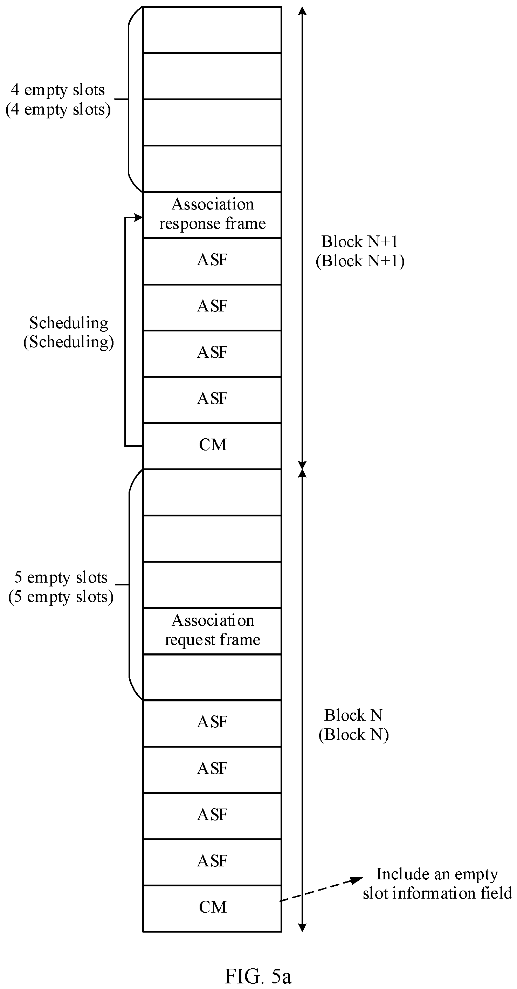

In an example, after receiving control information sent by the controller, the controlee may send the association request frame in an empty slot. Correspondingly, the controller receives the association request frame, and sends the association response frame in a next block. For example, as shown in FIG. 5a, a control IE of the control information in FIG. 5a may include the empty slot information field shown in FIG. 3. For related descriptions of the control information and the empty slot information field, refer to the related descriptions in FIG. 3. Details are not described herein again. It may be understood that a number of empty slots shown in FIG. 5a is merely an example. For related descriptions of FIG. 5a, refer to FIG. 2b, FIG. 3, and FIG. 4. Details are not described herein again. A dashed line shown in FIG. 5a indicates that the control information may include the empty slot information field, or may not include the empty slot information field.

In another example, the controlee may send the association request frame in a CAP in an application management period. For example, when the application management period is present in a beacon interval, the controlee may send the association request frame to the controller in any CAP, and the controller may send the association response frame to the controlee in a slot scheduled in the same CAP, a next CAP, or a CM in the same beacon interval. Sending the association request frame in the CAP in the application management period may provide association opportunities for more unassociated controlees.

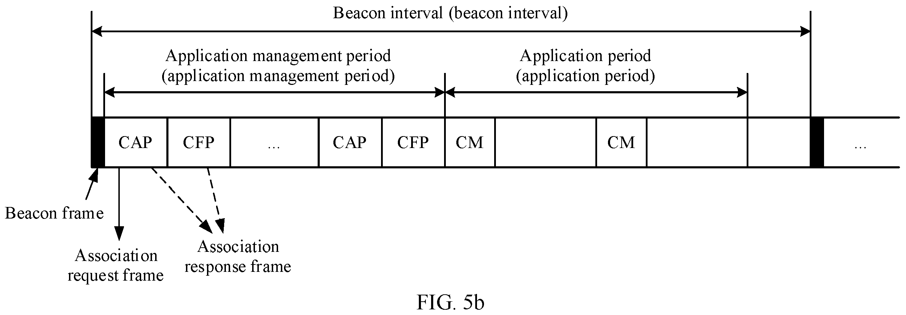

For example, as shown in FIG. 5b, when the controller receives the association request frame sent by the controlee in the CAP, if remaining CAP duration is sufficient to send the association response frame, the controller may attempt to send the association response frame to the controlee in the same CAP (that is, both the association request frame and the association response frame are in the same CAP); or if remaining CAP duration is insufficient to send the association response frame, the controller may attempt to send the association response frame to the controlee in a next CAP. In other words, if the controller does not have an opportunity to send the association response frame in the same CAP, or fails to send the association response frame in the same CAP, the controller may attempt to send the association response frame to the controlee in the next CAP.

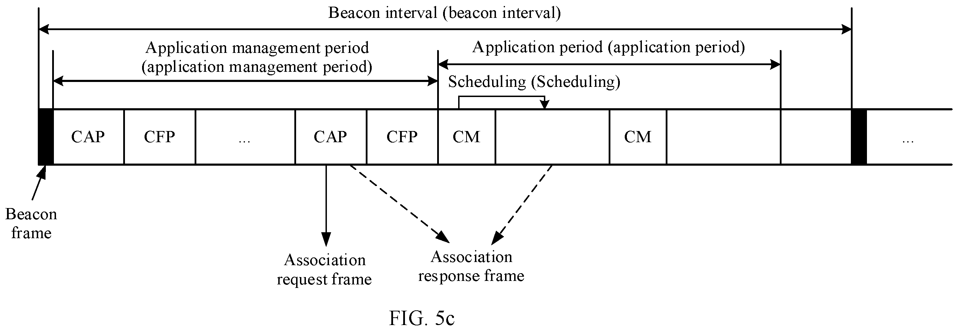

For example, as shown in FIG. 5c, when the controller receives the association request frame sent by the controlee in a last CAP of an application management period, if remaining CAP duration is insufficient to send the association response frame, the controller may send the association response frame to the controlee via a slot in an application period scheduled by a CM; or if remaining CAP duration is sufficient to send the association response frame, the controller may attempt to send the association response frame to the controlee in the same CAP. In this case, if the controller does not have the opportunity to send the association response frame in the same CAP, or fails to send the association response frame in the same CAP, the controller may send the association response frame to the controlee via the slot in the application period scheduled by the CM.

For example, control information in application periods shown in FIG. 5b and FIG. 5c may include an empty slot information field, or may not include an empty slot information field.

FIG. 6 is a schematic flowchart of an information processing method according to an embodiment of this application. As shown in FIG. 6, the method includes the following steps.

601: A controller sends capability information. Correspondingly, a controlee receives the capability information. The capability information is used to carry capability information of the controller.

In this embodiment of this application, the capability information may include the capability information shown in Table 3, and the extended capability information shown in Table 6 and Table 7. Therefore, for specific content of the capability information, refer to the foregoing descriptions. Details are not described herein again. It may be understood that the capability information shown in Table 3, Table 6, and Table 7 may be understood as capability information of the controlee, and the capability information shown in this embodiment of this application is the capability information of the controller. Although objects of the capability information are different, for types of the capability information, adaptively refer to the related descriptions of Table 3, Table 6, Table 7, and the like.

In an example, the capability information may be carried in a beacon frame. Table 13 shows an example of a format of the beacon frame. For example, the capability information may be included in a beacon payload field in the beacon frame. Alternatively, for example, the capability information shown in Table 3 is included in a beacon payload field of the beacon frame. For example, the extended capability information shown in Table 6 and Table 7 is included in a payload IE of the beacon frame. Examples are not enumerated. For example, when the capability information of the controller is carried in the beacon frame, as shown in FIG. 7a, for example, the controller sends the beacon frame, and the controlee receives the beacon frame and determines the capability information of the controller based on the beacon frame. Then, the controller sends control information in an application period, and the controlee receives the control information and determines an empty slot. The controlee sends an association request frame in the empty slot, and correspondingly, the controller receives the association request frame. The controller sends an association request frame, and correspondingly, the controlee receives the association response frame. If a value of an association status field in the association response frame indicates "association successful", the controlee is successfully associated with the controller; or if a value of an association status field in the association response frame does not indicate "association successful" (for descriptions of statuses other than association successful, refer to Table 9 or Table 12), the controlee fails to be associated with the controller. A control IE in the control information shown in FIG. 7a may include an empty slot information field, or may not include an empty slot information field. For frame formats of the association request frame and the association response frame shown in FIG. 7a, refer to the related descriptions in FIG. 4. Certainly, the frame format shown in FIG. 2b may alternatively be used. This is not limited in embodiments of this application.

**Table 13**

| Octet: variable | Variable | Variable | 2/4 |
|---|---|---|---|
| MHR | Payload IE | Beacon payload | FCS |

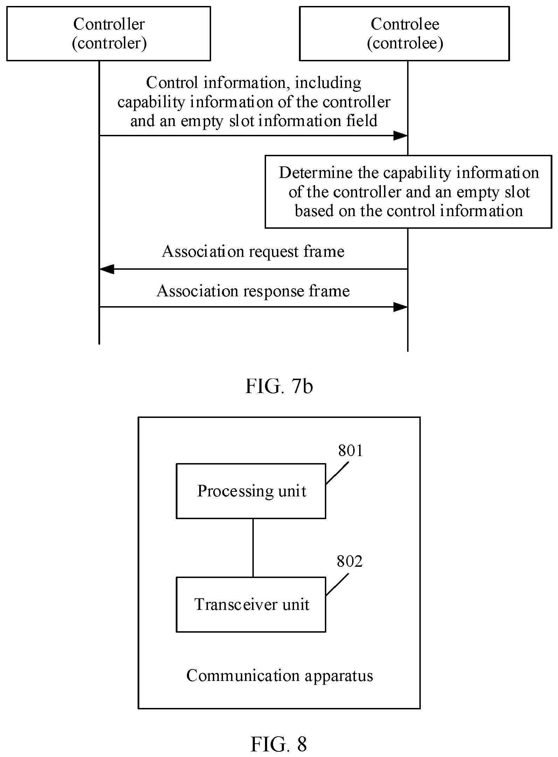

In another example, the capability information may be carried in a CM. For example, when the capability information is carried in control information, as shown in FIG. 7b, the controller may send the control information, where a control IE in the control information may include an empty slot information field. After receiving the control information, the controlee may determine the capability information of the controller based on the control information, and quickly learn of information about an empty slot based on the control IE. For frame formats of an association request frame and an association response frame shown in FIG. 7a, refer to the related descriptions in FIG. 4. Certainly, the frame format shown in FIG. 2b may alternatively be used. This is not limited in embodiments of this application. For example, the capability information of the controller may be carried in an IE of the control information, or may be carried in a control element or a scheduling element of the control information, or may be carried in another field of the control information. This is not limited in embodiments of this application.

Certainly, the capability information may alternatively be carried in the beacon frame and the CM.

602: The controlee determines the capability information of the controller based on the capability information.

For example, after determining the capability information of the controller, the controlee may determine, based on the capability information, whether to send an association request frame to the controller.

It may be understood that the method shown in FIG. 6 may be combined with the method shown in FIG. 4. A specific combination manner is not described in detail herein again.

In this embodiment of this application, the controlee learns of the capability information of the controller before sending the association request frame, so that a case in which association cannot be performed because a capability of the controller is insufficient to provide a service for the controlee can be effectively avoided. In this way, the controlee can fully understand the capability of the controller. This ensures success of association between the controlee and the controller, and improves integrity of a UWB in-band discovery and association mechanism.

In embodiments shown in this application, a "field" is used as an example for illustration, and a "field" is not specifically distinguished from a "subfield" and the like. Although the "field" and the "subfield" are not specifically distinguished in embodiments shown in this application, a person skilled in the art may adaptively distinguish between a relationship between the fields (or elements and fields) shown in this application. Optionally, in actual application, the field, the element, and the like shown in embodiments of this application may alternatively be represented in a form of information. Therefore, a representation form of content like the field, the subfield, the element, and the indication information is not limited in embodiments of this application. In the foregoing embodiments, for content that is not described in detail in one embodiment, refer to another embodiment. The foregoing embodiments may alternatively be combined with each other. A specific combination manner is not described in detail again.

Communication apparatuses provided in embodiments of this application are described below.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, division into modules is an example, and is merely logical function division. In actual implementation, another division manner may be used. The following describes in detail the communication apparatuses in embodiments of this application with reference to FIG. 8 to FIG. 10.

FIG. 8 is a diagram of a structure of a communication apparatus according to an embodiment of this application. As shown in FIG. 8, the communication apparatus includes a processing unit 801 and a transceiver unit 802. The transceiver unit 802 may implement a corresponding communication function, and the processing unit 801 is configured to process data. For example, the transceiver unit 802 may also be referred to as a communication interface, a communication unit, or the like.

In some embodiments of this application, the communication apparatus may be configured to perform an action performed by the controlee in the foregoing method embodiment. In this case, the communication apparatus may be the controlee or a component (like a chip or a system) that may be configured in the controlee. The transceiver unit 802 is configured to perform operations related to receiving and sending of the controlee in the foregoing method embodiment. The processing unit 801 is configured to perform operations related to processing of the controlee in the foregoing method embodiment. The communication apparatus may be configured to perform the steps, the functions, or the like performed by the controlee in the foregoing method embodiment.

The transceiver unit 802 is configured to input control information.

The processing unit 801 is configured to determine information about an empty slot based on an empty slot information field in a control information element in the control information.

It may be understood that, that the transceiver unit 802 is configured to input control information may be understood as that the processing unit 801 inputs the control information through the transceiver unit 802, or the transceiver unit 802 receives the control information sent by a controller.

**In** a possible implementation, the processing unit 801 is further configured to ignore a scheduling information element in the control information (or it may be understood that the scheduling information element is not parsed).

**In** a possible implementation, the transceiver unit 802 is further configured to: send an association request frame in the empty slot indicated by the empty slot information field; and receive an association response frame for the association request frame.

For example, the transceiver unit 802 may be configured to: send an association request frame to the controller, and receive an association response frame from the controller. Alternatively, the transceiver unit 802 may be configured to: output the association request frame from the processing unit 801, input the association response frame to the processing unit 801, and the like. Specific implementations of the transceiver unit are not enumerated in embodiments of this application.

**In** a possible implementation, the transceiver unit 802 is further configured to receive a beacon frame.

For example, the transceiver unit 802 may be configured to receive a beacon frame sent by the controller, or input the beacon frame to the processing unit 801.

Optionally, the communication apparatus may further include a storage unit. The storage unit may be configured to store instructions and/or data. The processing unit 801 may read the instructions and/or the data in the storage unit, so that the communication apparatus implements the foregoing method embodiment. For example, the storage unit may be configured to store at least one of the following: a first bitmap (or a second bitmap), capability information of the controller, or capability information of the controlee.

It may be understood that the specific descriptions of the transceiver unit and the processing unit shown in embodiments of this application are merely examples. For specific functions, steps, or the like performed by the transceiver unit and the processing unit, refer to the foregoing method embodiment. Details are not described herein again. The foregoing descriptions of the processing unit and the transceiver unit are merely examples. For descriptions of the foregoing terms, refer to the method embodiment. For example, for descriptions of the control information, the control IE, the scheduling IE, the association request frame, the association response frame, the beacon frame, and the like, refer to the foregoing method embodiment. Details are not described herein again.

FIG. 8 is reused. In some other embodiments of this application, the communication apparatus may be configured to perform an action performed by the controller in the foregoing method embodiment. In this case, the communication apparatus may be the controller or a component that may be configured in the controller. The transceiver unit 802 is configured to perform operations related to sending and receiving of the controller in the foregoing method embodiment. The processing unit 801 is configured to perform operations related to processing of the controller in the foregoing method embodiment. In other words, the communication apparatus may be configured to perform the steps, the functions, or the like performed by the controller in the foregoing method embodiment.

The processing unit 801 is configured to generate control information.

The transceiver unit 802 is configured to output the control information.

For example, the transceiver unit 802 may send the control information to a controlee, or may output the control information from the processing unit 801.

For example, the transceiver unit 802 may be configured to: receive an association request frame, and send an association response frame.

For example, the transceiver unit 802 may be configured to receive an association request frame sent by the controlee, or input the association request frame to the processing unit 801. The transceiver unit 802 may be configured to send an association response frame to the controlee, or output the association response frame from the processing unit 801.

In a possible implementation, the transceiver unit 802 is further configured to send a beacon frame. For example, the transceiver unit 802 may output the beacon frame from the processing unit 801, or send the beacon frame to the controlee.

Optionally, the communication apparatus may further include a storage unit. The storage unit may be configured to store instructions and/or data. The processing unit 801 may read the instructions and/or the data in the storage unit, so that the communication apparatus implements the foregoing method embodiment. For example, the storage unit may be configured to store at least one of the following: a first bitmap (or a second bitmap), capability information of the controller, or capability information of the controlee.

It may be understood that the specific descriptions of the transceiver unit and the processing unit shown in embodiments of this application are merely examples. For specific functions, steps, or the like performed by the transceiver unit and the processing unit, refer to the foregoing method embodiment. Details are not described herein again. It may be understood that the foregoing descriptions of the processing unit and the transceiver unit are merely examples. For descriptions of the foregoing terms, refer to the method embodiment. For example, for descriptions of the control information, the control IE, the scheduling IE, the association request frame, the association response frame, the beacon frame, and the like, refer to the foregoing method embodiment. Details are not described herein again.

The foregoing describes the communication apparatus in embodiments of this application. The following describes possible product forms of the communication apparatus. It should be understood that any product in any form that has a function of the communication apparatus in FIG. 8 falls within the protection scope of embodiments of this application.

In a possible implementation, in the communication apparatus shown in FIG. 8, the processing unit 801 may be one or more processors, and the transceiver unit 802 may be a transceiver, or the transceiver unit 802 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may further need to be performed on the information before processed information is input into the processor.

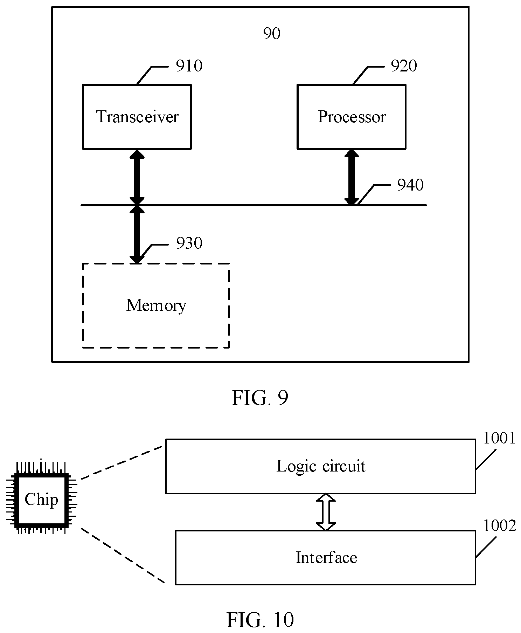

As shown in FIG. 9, a communication apparatus 90 includes one or more processors 920 and a transceiver 910.

For example, when the communication apparatus is configured to perform the steps, the methods, or the functions performed by the controlee.

The transceiver 910 is configured to receive control information.

The processor 920 is configured to determine information about an empty slot based on an empty slot information field in a control information element in the control information.

In a possible implementation, the processor 920 is further configured to ignore a scheduling information element in the control information (or it may be understood that the scheduling information element is not parsed).

In a possible implementation, the transceiver 910 is further configured to: send an association request frame in the empty slot indicated by the empty slot information field; and receive an association response frame for the association request frame.

In a possible implementation, the transceiver 910 is further configured to receive a beacon frame.

For example, when the communication apparatus is configured to perform the steps, the methods, or the functions performed by the controller.

The processor 920 is configured to generate control information.

The transceiver 910 is configured to output the control information.

For example, the transceiver 910 may be configured to: receive an association request frame, and send an association response frame.

For example, the transceiver 910 is further configured to send a beacon frame.

It may be understood that for specific descriptions of the processor and the transceiver, refer to the descriptions of the processing unit and the transceiver unit shown in FIG. 8. Details are not described herein again. For descriptions of the foregoing terms, refer to the method embodiment. For example, for descriptions of the control information, the control IE, the scheduling IE, the association request frame, the association response frame, the beacon frame, and the like, refer to the foregoing method embodiment. Details are not described herein again.

In each implementation of the communication apparatus shown in FIG. 9, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 90 may further include one or more memories 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. Optionally, at least one of the one or more memories may be included in the processor. Optionally, the one or more memories may be configured to store a first bitmap (or a second bitmap), capability information of the controller, capability information of the controlee, and the like in embodiments of this application.

In this embodiment of this application, a specific connection medium among the transceiver 910, the processor 920, and the memory 930 is not limited. In this embodiment of this application, in FIG. 9, the memory 930, the processor 920, and the transceiver 910 are connected to each other through a bus 940. The bus is represented by using a thick line in FIG. 9. A manner of connection between other components is only schematically described, but is not used as a limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combining of hardware and software modules in the processor, or the like.

In this embodiment of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 920 is mainly configured to: process a communication protocol and communication data, control the entire communication apparatus, execute a software program, and process data of the software program. The memory 930 is mainly configured to store the software program and the data. The transceiver 910 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. An input/output apparatus, for example, a touchscreen, a display, or a keyboard, is mainly configured to: receive data input by a user and output data to the user.

After the communication apparatus is powered on, the processor 920 may read the software program in the memory 930, interpret and execute instructions of the software program, and process the data of the software program. When data needs to be sent wirelessly, the processor 920 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 920. The processor 920 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

It may be understood that the communication apparatus shown in embodiments of this application may further have more components than those shown in FIG. 9, and the like. This is not limited in embodiments of this application. The methods performed by the processor and the transceiver and shown above are merely examples. For specific steps performed by the processor and the transceiver, refer to the methods described above.

In another possible implementation, in the communication apparatus shown in FIG. 8, the processing unit 801 may be one or more logic circuits. The transceiver unit 802 may be an input/output interface that is also referred to as a communication interface, an interface circuit, an interface, or the like. Alternatively, the transceiver unit 802 may be a sending unit and a receiving unit. The sending unit may be an output interface, and the receiving unit may be an input interface. The sending unit and the receiving unit are integrated into one unit, for example, an input/output interface. As shown in FIG. 10, a communication apparatus shown in FIG. 10 includes a logic circuit 1001 and an interface 1002. That is, the processing unit 801 may be implemented through the logic circuit 1001, and the transceiver unit 802 may be implemented through the interface 1002. The logic circuit 1001 may be a chip, a processing circuit, an integrated circuit, a system on chip (system on chip, SoC), or the like. The interface 1002 may be a communication interface, an input/output interface, a pin, or the like. FIG. 10 shows an example in which the communication apparatus is a chip. The chip includes the logic circuit 1001 and the interface 1002.

In this embodiment of this application, the logic circuit and the interface may be coupled to each other. A specific manner of connection between the logical circuit and the interface is not limited in embodiments of this application.

For example, when the communication apparatus is configured to perform the methods, the functions, or the steps performed by the controlee, the interface 1002 is configured to input control information, and the logic circuit 1001 is configured to determine information about an empty slot based on an empty slot information field in the control information.

In a possible implementation, the logic circuit 1001 is further configured to: output an association request frame in the empty slot indicated by the empty slot information field; and parse an association response frame input through the interface.

In a possible implementation, the interface 1002 is further configured to input a beacon frame, and the logic circuit 1001 is configured to parse the beacon frame.

For example, when the communication apparatus is configured to perform the methods, the functions, or the steps performed by the controller, the logic circuit 1001 is configured to generate control information, and the interface 1002 is configured to output the control information.

In a possible implementation, the logic circuit 1001 is further configured to: input an association request frame in an empty slot indicated by an empty slot information field, and output an association response frame for the association request frame.

For example, the logic circuit may input the association request frame through the interface, and parse the association request frame. For example, the logic circuit may be configured to: determine the association response frame, and output the association response frame through the interface.

In a possible implementation, the interface 1002 is configured to output a beacon frame.

For example, the logic circuit may be further configured to determine the beacon frame.

Optionally, the communication apparatus may further include a memory. The memory may be configured to store a first bitmap (or a second bitmap), capability information of the controller, capability information of the controlee, and the like.

For descriptions of the foregoing terms, refer to the method embodiment. For example, for descriptions of the control information, the control IE, the scheduling IE, the association request frame, the association response frame, the beacon frame, and the like, refer to the foregoing method embodiment. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of the embodiments shown in FIG. 10, refer to the foregoing embodiments. Details are not described herein again.

An embodiment of this application further provides a wireless communication system. The wireless communication system includes a controlee and a controller. The controlee and the controller may be configured to perform the method in any one of the foregoing embodiments. Alternatively, for the controlee and the controller, refer to the communication apparatuses shown in FIG. 8 to FIG. 10.

In addition, this application further provides a computer program. The computer program is used to implement operations and/or processing performed by the controlee in the methods provided in this application.

This application further provides a computer program. The computer program is used to implement operations and/or processing performed by the controller in the methods provided in this application.

This application further provides a computer-readable storage medium. The computer-readable storage medium stores computer code. When the computer code is run on a computer, the computer is enabled to perform operations and/or processing performed by the controlee in the methods provided in this application.

This application further provides a computer-readable storage medium. The computer-readable storage medium stores computer code. When the computer code is run on a computer, the computer is enabled to perform operations and/or processing performed by the controller in the methods provided in this application.

This application further provides a computer program product. The computer program product includes computer code or a computer program. When the computer code or the computer program is run on a computer, operations and/or processing performed by the controlee in the methods provided in this application are/is performed.

This application further provides a computer program product. The computer program product includes computer code or a computer program. When the computer code or the computer program is run on a computer, operations and/or processing performed by the controller in the methods provided in this application are/is performed.

In the several embodiments provided in this application, it should be understood that the disclosed system, apparatus, and method may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, wherein the method comprises:
receiving control information, wherein the control information comprises a control information element, the control information element comprises an empty slot information field, and the empty slot information field indicates an empty slot in a block corresponding to the control information; and
determining information about the empty slot based on the empty slot information field in the control information element.

2. The method according to claim 1, wherein the control information further comprises a scheduling information element, and the method further comprises:
ignoring the scheduling information element in the control information.

3. The method according to claim 1 or 2, wherein the control information element further comprises an indication field, a value carried in the indication field comprises a first value, and the first value indicates that the empty slot information field is present in the control information element.

4. The method according to any one of claims 1 to 3, wherein the empty slot information field is used to carry a first bitmap, and each bit in the first bitmap indicates whether a corresponding slot is an empty slot; and a length of the first bitmap is greater than or equal to a number of slots comprised in the block, or a length of the first bitmap is greater than or equal to a number of remaining slots in the block, wherein the remaining slot is a slot after a slot that is in the block and that is used to send the control information.

5. The method according to any one of claims 1 to 3, wherein the empty slot information field is used to carry start slot information corresponding to a second bitmap and the second bitmap, the start slot information indicates a slot corresponding to the 1^{st} bit in the second bitmap, and each bit in the second bitmap indicates whether a corresponding slot is an empty slot.

6. The method according to any one of claims 1 to 5, wherein the control information further comprises a capability information field, and the capability information field is used to carry capability information of a controller.

7. The method according to any one of claims 1 to 6, wherein after determining the information about the empty slot based on the empty slot information field in the control information element, the method further comprises:
sending an association request frame in the empty slot indicated by the empty slot information field; and
receiving an association response frame for the association request frame.

8. The method according to claim 7, wherein the association request frame comprises a medium access control MAC layer management entity MLME element, the MLME element comprises an extended capability information element, the extended capability information element is used to carry capability information of a controlee, and an identifier of the extended capability information element comprises 0x1.

9. The method according to claim 7 or 8, wherein an identifier of the association request frame comprises 0x0c.

10. The method according to any one of claims 7 to 9, wherein the association response frame comprises at least one of an ultra wideband session at capacity field or an association denied field, an identifier of the UWB session at capacity field comprises 0x04, and an identifier of the association denied field comprises 0x05.

11. The method according to any one of claims 7 to 10, wherein an identifier of the association response frame comprises 0x0d.

12. An information processing method, wherein the method comprises:
generating control information, wherein the control information comprises a control information element, the control information element comprises an empty slot information field, and the empty slot information field indicates an empty slot in a block corresponding to the control information; and
sending the control information.

13. The method according to claim 12, wherein the control information element further comprises an indication field, a value carried in the indication field comprises a first value, and the first value indicates that the empty slot information field is present in the control information element.

14. The method according to claim 12 or 13, wherein the empty slot information field is used to carry a first bitmap, and each bit in the first bitmap indicates whether a corresponding slot is an empty slot; and a length of the first bitmap is greater than or equal to a number of slots comprised in the block, or a length of the first bitmap is greater than or equal to a number of remaining slots in the block, wherein the remaining slot is a slot after a slot that is in the block and that is used to send the control information.

15. The method according to claim 12 or 13, wherein the empty slot information field is used to carry start slot information corresponding to a second bitmap and the second bitmap, the start slot information indicates a slot corresponding to the 1^{st} bit in the second bitmap, and each bit in the second bitmap indicates whether a corresponding slot is an empty slot.

16. The method according to any one of claims 12 to 15, wherein the control information further comprises a capability information field, and the capability information field is used to carry capability information of a controller.

17. The method according to any one of claims 12 to 16, wherein the method further comprises:
receiving an association request frame in the empty slot indicated by the empty slot information field; and
sending an association response frame for the association request frame.

18. The method according to claim 17, wherein the association request frame comprises a medium access control MAC layer management entity MLME element, the MLME element comprises an extended capability information element, the extended capability information element is used to carry capability information of a controlee, and an identifier of the extended capability information element comprises 0x1.

19. The method according to claim 17 or 18, wherein an identifier of the association request frame comprises 0x0c.

20. The method according to any one of claims 17 to 19, wherein the association response frame comprises at least one of an ultra wideband session at capacity field or an association denied field, an identifier of the UWB session at capacity field comprises 0x04, and an identifier of the association denied field comprises 0x05.

21. The method according to any one of claims 17 to 20, wherein an identifier of the association response frame comprises 0x0d.

22. A communication apparatus, comprising a unit configured to perform the method according to any one of claims 1 to 21.

23. A communication apparatus, comprising a processor and a memory, wherein
the memory is configured to store instructions; and
the processor is configured to execute the instructions, so that the method according to any one of claims 1 to 21 is performed.

24. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 21 is performed.

25. A computer-readable storage medium, wherein the computer-readable storage medium is configured to store a computer program; and when the computer program is executed, the method according to any one of claims 1 to 21 is performed.

26. A computer program, wherein when the computer program is executed, the method according to any one of claims 1 to 21 is performed.

27. A communication system, wherein the communication system comprises a controlee and a controller, the controlee is configured to perform the method according to any one of claims 1 to 11, and the controller is configured to perform the method according to any one of claims 12 to 21.
